# FASCICULE DE BREVET EUROPEEN

(11) **EP 2 630 340 B1**
(45) Date de publication et mention de la délivrance du brevet: **13.05.2015**
(21) Numéro de dépôt: 11832094.4
(22) Date de dépôt: 11.10.2011
(51) Int. Cl.: F01D 25/20, F01D 25/32, F02C 7/06, F16K 17/04

(54) **DISPOSITIF DE LUBRIFICATION AVEC VANNE DE DERIVATION.**
SCHMIERVORRICHTUNG MIT EINEM BYPASSVENTIL
LUBRICATING DEVICE HAVING A BYPASS VALVE

(30) Priorité: 20.10.2010 FR 1058550
(43) Date de publication de la demande: 28.08.2013
(73) Titulaire: Turbomeca, 64510 Bordes (FR)
(72) Inventeur: DETRY, Sébastien, F-64320 Bizanos (FR); CAZAUX, Yannick, F-64230 Arbus (FR); DESCUBES, Olivier, Pierre, F-64800 Nay (FR)
(74) Mandataire: Calvo de Nó, Rodrigo
(86) Numéro de dépôt international: PCT/FR2011/052365
(87) Numéro de publication internationale: WO 2012/052658

(56) Documents cités:
- EP-A1- 0 159 772
- GB-A- 589 095
- US-A- 4 452 037
- US-B1- 6 263 913

## Description

La présente invention concerne un dispositif de lubrification, en particulier pour une turbomachine telle que, par exemple, un turboréacteur, un turbomoteur ou un turbopropulseur.

Dans certains appareils, en particulier les turbomachines, il peut être avantageux, voire éventuellement nécessaire, d'arrêter, dériver ou réduire un débit de lubrifiant apporté à certains éléments, tels que des enceintes de palier, en dessous d'un certain régime d'un arbre moteur. En particulier quand la circulation de ce lubrifiant à travers ces éléments à lubrifier est actionnée par deux pompes, dont une pompe d'alimentation en amont et une pompe de récupération en aval des éléments à lubrifier, il existe une possibilité de déséquilibre à bas régime entre les débits des deux pompes. Un tel déséquilibre, lorsque la pompe d'alimentation fournit un débit de lubrifiant supérieur à celui qui est évacué par la pompe de récupération, peut provoquer une stagnation de lubrifiant dans les éléments à lubrifier, des risques de cokéfaction du lubrifiant, qui serait préjudiciable pour ces éléments.

Des dispositifs de lubrification présentant des mesures visant à arrêter le débit de lubrifiant en amont des éléments à lubrifier en-dessous d'un certain régime ont été divulgués dans l'art antérieur. Parmi les dispositifs utilisés on compte notamment les clapets de pied en aval de la pompe d'alimentation et les dispositifs anti-siphon en amont de la pompe d'alimentation. Toutefois, comme un brusque arrêt du débit de lubrifiant pourrait causer des dommages à la pompe d'alimentation si elle était encore en fonctionnement lors de cet arrêt, et que des telles pompes d'alimentation ne se désamorcent normalement qu'à un très faible régime de l'arbre moteur, les clapets de pied et dispositifs anti-siphon de l'art antérieur sont généralement ajustés pour n'arrêter le débit de lubrifiant qu'à un très bas régime de la machine à lubrifier, ce qui diminue leur efficacité contre l'accumulation de lubrifiant dans les éléments à lubrifier.

Aux bas régimes, la diminution progressive de la performance du circuit de récupération, par rapport au débit apporté par le circuit d'alimentation, peut causer une stagnation du lubrifiant dans ces éléments. Lorsque ces éléments sont chauds, ceci présente un risque de cokéfaction du lubrifiant stagnant. Comme les turbomachines modernes fonctionnent à des températures de plus en plus élevées afin d'augmenter leur rendement, ce risque de cokéfaction augmente également, d'autant plus si un phénomène, dit de « soak back », se manifeste, dans lequel les éléments à lubrifier se réchauffent temporairement lors de l'arrêt de l'arbre moteur. Cette cokéfaction peut même entraîner l'obturation de gicleurs de lubrification et/ou des circuits de récupération d'huile.

Dans l'art antérieur, d'autres dispositifs de lubrification ont été divulgués comportant des dispositifs pour éviter l'accumulation de lubrifiant à bas régimes. Ainsi, dans le brevet US 4,170,873, un dispositif de lubrification a été divulgué qui comporte un circuit d'alimentation en lubrifiant, et un circuit de dérivation connecté au circuit d'alimentation. Pour arrêter l'amenée de lubrifiant vers des éléments à lubrifier avant l'arrêt d'une pompe d'alimentation dans le circuit d'alimentation, le système de lubrification comporte d'un côté un clapet anti-retour dans le circuit d'alimentation, en aval du circuit de dérivation, et, d'un autre côté, dans le circuit de dérivation, un clapet de dérivation agencé pour s'ouvrir en dessous d'une pression d'alimentation prédéterminée. Ainsi, quand la pression d'alimentation tombe en dessous de ce seuil, le clapet de dérivation va s'ouvrir et le clapet anti-retour se fermer, de manière à dévier le lubrifiant du circuit d'alimentation sans passer par les éléments à lubrifier. Toutefois, ce système de lubrification de l'art antérieur présente l'inconvénient de comporter deux clapets séparés, et donc une complication supplémentaire et deux sources potentielles de pannes.

Dans le brevet US 4,245,465, un autre dispositif de lubrification a été divulgué qui comporte un circuit d'alimentation en lubrifiant, et un circuit de dérivation connecté au circuit d'alimentation. Cet autre système de lubrification comporte une seule vanne à trois voies agencée entre le circuit d'alimentation et le circuit de dérivation pour fermer le circuit d'alimentation à bas régime, et moduler la dérivation du débit à des régimes supérieurs. Toutefois, cette vanne est complexe et peut présenter une hystérèse importante entre les seuils d'ouverture et fermeture du circuit d'alimentation, et globalement ce système d'alimentation ne résout pas le problème de la stagnation du lubrifiant dans les éléments à lubrifier, puisqu'il ne comporte pas de pompe de récupération pour l'évacuer après la fermeture du circuit d'alimentation.

Dans la demande de brevet européen EP 2 202 387 A1, plusieurs dispositifs alternatifs de lubrification ont été divulgués, comportant chacun un circuit d'alimentation en lubrifiant, et un circuit de dérivation. Chaque système de lubrification comporte en outre, entre le circuit d'alimentation et le circuit de dérivation, une vanne comportant une entrée reliée audit circuit d'alimentation, une première sortie apte à être reliée à des éléments à lubrifier, une deuxième sortie reliée au circuit de dérivation, et une soupape logée dans une cavité de la vanne, délimitant une première chambre d'une deuxième chambre. Ladite première chambre est reliée à l'entrée, et ladite soupape est apte à coulisser entre une première position et une deuxième position, présentant du côté de la première chambre une surface d'actionnement hydraulique vers la deuxième position, et du côté de la deuxième chambre une surface d'actionnement hydraulique vers la première position. La vanne comporte aussi un actionneur de rappel de la soupape vers la première position. Dans cette première position un passage fluidique de la première chambre à la deuxième sortie est ouvert tandis qu'un passage fluidique de la première chambre à la première sortie est fermé. Par contre, dans la deuxième position, le passage fluidique de la première chambre à la première sortie est ouvert tandis que le passage fluidique de la première chambre à la deuxième sortie est fermé.

Ainsi, dans la première position de soupape, comme le circuit d'alimentation est relié, à travers l'entrée, à la première chambre de la vanne, et le circuit de dérivation est relié, à travers la deuxième sortie, à la deuxième chambre de la vanne, quand la pression d'alimentation sera suffisamment élevée par rapport à la pression dans le circuit de dérivation, la différence de pression entre les deux chambres poussera la soupape vers la deuxième position jusqu'à ce que, dans cette deuxième position, le passage fluidique de la première chambre à la deuxième sortie soit fermé, et celui de la première chambre à la première sortie soit ouvert. De cette manière, une surpression suffisante dans le circuit d'alimentation fait passer la soupape d'une première position de dérivation du débit de lubrifiant à une deuxième position d'alimentation des éléments à lubrifier.

Similairement, dans la deuxième position de soupape, quand la pression d'alimentation passe en dessous un certain seuil par rapport à la pression à la deuxième sortie, l'actionneur de rappel va faire revenir la soupape vers la première position de dérivation du lubrifiant.

Toutefois, les différents dispositifs de lubrification alternatifs divulgués dans EP 2 202 387 présentent encore certains inconvénients. Notamment, chaque vanne divulguée présente, à travers ou autour de la soupape, des passages fluidiques entre les première et deuxième chambres afin de permettre, dans ladite première position de soupape, le passage du lubrifiant de la première chambre vers la deuxième sortie et le circuit de dérivation. Ces passages peuvent introduire une instabilité indésirable tant lors de la fermeture que lors de l'ouverture du circuit de dérivation.

Quand le circuit d'alimentation se met en route, et qu'une surpression suffisante s'établit dans la première chambre, la soupape commencera à se déplacer de la première position vers la deuxième, contre la force exercée par l'actionneur de rappel. La différence de pression entre la première et la deuxième chambre est alors fonction de la perte de charge induite par le flux de lubrifiant à travers lesdits passages fluidiques entre les deux chambres. Toutefois, quand la soupape arrive à la deuxième position, elle obture le passage entre la deuxième chambre et la deuxième sortie. Comme la deuxième chambre n'évacue donc plus de fluide vers la deuxième sortie, les pressions des deux chambres s'égalisent à travers les passages fluidiques les reliant. La surface effective d'actionnement hydraulique sur laquelle agit la différence entre la pression du circuit d'alimentation et celle du circuit d'évacuation se réduit donc brusquement de celle de la section de la soupape, à celle, sensiblement inférieure, de la deuxième sortie. Sous l'effort de l'actionneur de rappel, la soupape pourrait donc repartir dans le sens opposé, rouvrant la deuxième sortie, rétablissant la différence de pression, et ainsi de suite.

Similairement, quand, à partir d'un régime normal d'alimentation, la pression descend en dessous d'un certain seuil, la soupape va commencer à se déplacer de la deuxième à la première position, ouvrant la deuxième sortie, et rétablissant le débit de lubrifiant à travers la soupape et la deuxième chambre vers cette deuxième sortie. La pression dans la deuxième chambre va cesser d'être égale à celle de la première chambre pour s'égaliser avec celle, inférieure, de la deuxième sortie. Ainsi, la surface effective d'actionnement hydraulique sur laquelle agit la différence entre la pression du circuit d'alimentation et celle du circuit d'évacuation augmente donc presque aussi brusquement de celle de la section de la deuxième sortie à celle de la section de la soupape. Si la différence de pression reste suffisamment élevée, la soupape va donc revenir vers la deuxième position, refermant la deuxième sortie, et recommençant aussi le cycle.

Pour cette raison, les différentes vannes divulguées dans EP 2 202 387 présentent une instabilité potentielle tant lors de l'ouverture que lors de la fermeture du circuit de dérivation, et une hystérèse entre les deux.

L'invention vise à proposer un dispositif de lubrification qui permette de résoudre le problème d'instabilité lors de l'ouverture et fermeture du circuit de dérivation, et celui de l'hystérèse entre les deux.

Ce but est atteint grâce au fait que, dans au moins un mode de réalisation de l'invention, au moins dans la deuxième position de la soupape, la soupape sépare lesdites première et deuxième chambres de manière sensiblement étanche, tandis que la deuxième chambre reste en communication fluidique avec la deuxième sortie.

Grâce à ces dispositions, ni l'arrivée de la soupape à la deuxième position, c'est-à-dire la position d'alimentation, ni son départ de cette deuxième position ne provoquent un changement sensible de la pression dans la deuxième chambre, ni de la force exercée sur la soupape par le différentiel de pression entre les circuits d'alimentation et de dérivation. On évite ainsi l'instabilité de la vanne tant lors de la fermeture que de l'ouverture du circuit de dérivation.

Avantageusement, le dispositif de lubrification comporte en outre un circuit d'évacuation de lubrifiant pour récupérer le lubrifiant des éléments à lubrifier. En particulier, ce circuit peut comporter une pompe d'évacuation.

Un tel circuit d'évacuation permet d'évacuer le lubrifiant des éléments à lubrifier, pour le réutiliser en circuit fermé, et aussi pour en évacuer la chaleur. En outre, ce circuit d'évacuation de lubrifiant, en combinaison avec le circuit et la vanne de dérivation, permet de limiter la quantité de lubrifiant dans les éléments à lubrifier lorsque la pression d'alimentation tombe en dessous d'un certain seuil, ce qui permet d'éviter des phénomènes liés à l'excès ou la stagnation de lubrifiant dans ces éléments, tels que les fuites ou la cokéfaction. A part cela, la limitation de la quantité de lubrifiant, typiquement combustible, dans ces éléments, permet aussi de réduire le danger en cas d'incendie, ce qui présente aussi l'avantage de réduire les exigences réglementaires de résistance au feu, permettant un dimensionnement plus économique des différents composants impliqués.

Avantageusement, le passage fluidique reliant la première chambre à la deuxième sortie dans la première position de la soupape présente une plus grande résistance à l'écoulement que le passage fluidique reliant la première chambre à la première sortie dans la deuxième position de la soupape. On assure ainsi une perte de charge plus grande dans la deuxième position que dans la première position, et une différence de pression entre les deux sorties.

L'invention concerne également un appareil comportant un arbre rotatif avec au moins un palier de soutien, et, pour lubrifier ce palier, un dispositif de lubrification selon l'invention. En particulier, un tel appareil peut comporter en outre, dans ledit circuit d'alimentation, en amont de la vanne, une pompe d'alimentation actionnée par ledit arbre rotatif, afin d'assurer une alimentation en carburant liée à la rotation dudit arbre rotatif. Par « actionnée », on entend, dans le contexte de la présente invention, tant un actionnement mécanique direct, qu'un actionnement indirect, à travers une transmission mécanique, hydraulique, pneumatique, ou électrique. Avantageusement, le dispositif de lubrification peut alors être calibré pour ce qu'un régime de rotation de l'arbre rotatif auquel la soupape arrive à la deuxième position lors d'une montée en régime soit dans une plage comprise entre 20 et 35% d'un régime nominal de l'arbre rotatif, et/ou qu'un régime de rotation de l'arbre rotatif auquel la soupape retourne à la première position lors d'une descente en régime soit dans une plage comprise entre 15 et 30% d'un régime nominal de l'arbre rotatif. En arrêtant l'alimentation en lubrifiant à une vitesse de rotation encore relativement élevée, on évite plus sûrement l'accumulation de lubrifiant à bas régime.

La présente invention concerne aussi une turbomachine, en particulier pour un aéronef, tel qu'un hélicoptère, comportant un tel appareil. Une telle turbomachine présente des contraintes de vitesse de rotation, fiabilité, lubrification, et sécurité contre les incendies particulièrement élevées, contexte qui rend l'utilisation de l'invention particulièrement avantageuse.

L'invention sera bien comprise et ses avantages apparaîtront mieux, à la lecture de la description détaillée qui suit, de plusieurs modes de réalisation représentés à titre d'exemples non limitatifs. La description se réfère aux dessins annexés sur lesquels :
- la figure 1 illustre schématiquement un aéronef propulsé par un un turbomoteur avec un dispositif de lubrification selon un premier mode de réalisation de l'invention ;
- la figure 2a illustre une coupe longitudinale de la vanne de dérivation du dispositif de lubrification de la figure 1, avec la soupape en une première position ;
- la figure 2b illustre une autre coupe longitudinale de la vanne de la figure 2a, avec la soupape en une deuxième position ;
- la figure 3a illustre une coupe longitudinale de la vanne de dérivation d'un dispositif de lubrification suivant un deuxième mode de réalisation de l'invention, avec la soupape en une première position ;
- la figure 3b illustre une autre coupe longitudinale de la vanne de la figure 3a, avec la soupape en une deuxième position ;
- la figure 4a illustre une coupe longitudinale de la vanne de dérivation d'un dispositif de lubrification suivant un troisième mode de réalisation de l'invention, avec la soupape en une première position ;
- la figure 4b illustre une autre coupe longitudinale de la vanne de la figure 4a, avec la soupape en une deuxième position ;
- la figure 5 illustre de manière schématique une courbe de débit d'alimentation en lubrifiant par un dispositif de lubrification suivant un quelconque des modes de réalisation illustrés, en fonction de la pression d'alimentation.

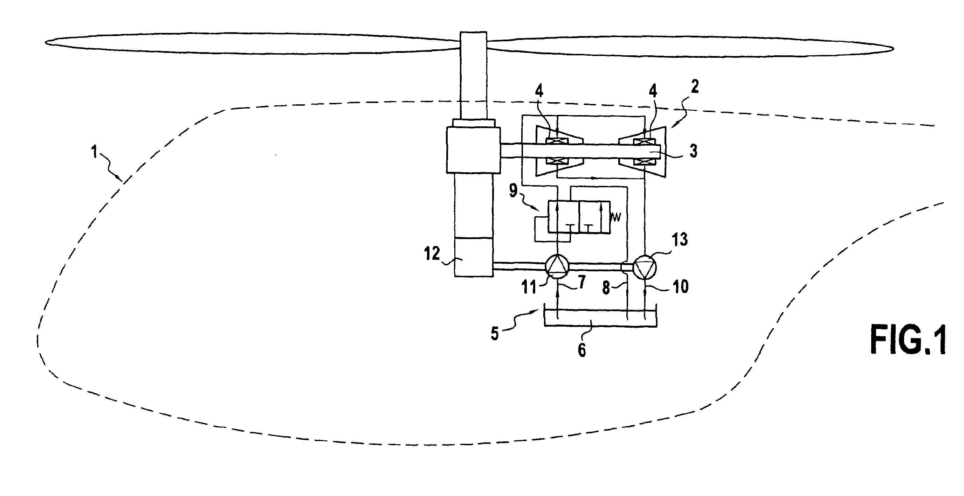

La figure 1 illustre schématiquement un aéronef, plus précisément un hélicoptère 1, comportant un turbomoteur 2 avec un arbre moteur 3 rotatif soutenu par des paliers 4, et un dispositif de lubrification 5 pour lubrifier lesdits paliers 4.

Le dispositif de lubrification 5 comporte un réservoir de lubrifiant 6, un circuit d'alimentation 7 des paliers 4 en lubrifiant, un circuit de dérivation 8, une vanne 9 interposée entre le circuit d'alimentation 7 et le circuit de dérivation 8, et un circuit d'évacuation 10 du lubrifiant des paliers 4. Le circuit d'alimentation 8 comporte une pompe d'alimentation 11 volumétrique, actionnée par l'arbre moteur 3 à travers une transmission à accessoires 12 (en anglais : « Accessory Gear Box » ou « AGB »). Le circuit d'évacuation 10 comporte une pompe d'évacuation 13, elle aussi volumétrique et actionnée par l'arbre moteur 3 à travers l'AGB 12. Les pompes d'alimentation 11 et évacuation 13 sont ainsi normalement coordonnées pour faire circuler sensiblement le même débit et éviter, à au moins un régime nominal, une accumulation ou un défaut de lubrifiant dans les paliers 4.

Toutefois, aux bas régimes, il ne peut plus être assuré que ces débits resteront pareils. Il y a donc notamment un risque d'accumulation ou stagnation de lubrifiant dans les paliers 4. Pour éviter cela, le dispositif de lubrification 5 comporte la vanne de dérivation 9, pilotée par la pression d'alimentation. Cette vanne 9 est une vanne à trois voies et deux positions, avec une entrée IN reliée au circuit d'alimentation 7, une première sortie M reliée aux paliers 4 pour les alimenter en lubrifiant, et une deuxième sortie BP de dérivation du lubrifiant à travers le circuit de dérivation 8 vers le réservoir 6, directement, comme illustré, ou indirectement, à travers, par exemple, de l'AGB 12.

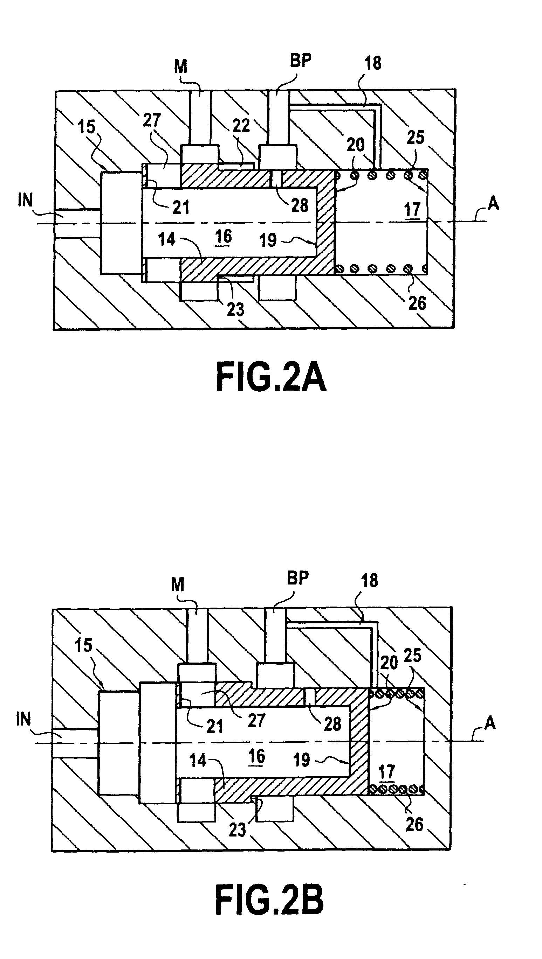

Un première variante de cette vanne 9 est illustré sur les figures 2a et 2b. La vanne 9 illustrée est du type dit « à tiroir », avec une soupape 14 coulissante dans un axe A entre deux positions dans une cavité 15 de la vanne 9. Dans cette cavité 15, la soupape 14 délimite deux chambres 16, 17, dont la première est en communication fluidique avec l'entrée IN et la deuxième est en communication fluidique, à travers un drain 18, avec la deuxième sortie BP de la vanne 9. La soupape 14 sépare les chambres 16,17 de manière sensiblement étanche, et présente du côté de la première chambre 16 une surface 19 d'actionnement hydraulique de la soupape en direction de la deuxième position, c'est-à-dire, dans le mode de réalisation illustré, en direction de la deuxième chambre 17. La soupape 14 présente aussi, du côté de la deuxième chambre 17, une surface 20 d'actionnement hydraulique de la soupape en direction de la première position, c'est-à-dire, dans le mode de réalisation illustré, en direction de la première chambre 16. La cavité 15 présente une première butée 21 déterminant la première position de la soupape 14, et une deuxième butée 22 en forme d'épaulement, opposée à la première, et déterminant, avec un épaulement 23 complémentaire dans la soupape 14, la deuxième position de la soupape. Un actionneur de rappel 26, sous forme d'un ressort élastique prenant appui sur un fond 25 de la cavité 15, pousse la soupape 14 en direction de la première position.

Le conduit de l'entrée IN est sensiblement dans l'axe de coulissement A. Par contre, les conduits des deux sorties M, BP sont sensiblement perpendiculaires à cet axe de coulissement A. La soupape 14 présente deux orifices 27, 28, s'alignant, respectivement, avec la première sortie M dans la deuxième position, et avec la deuxième sortie BP dans la première position, de manière à mettre la première chambre 16 de la cavité 15 en communication fluidique avec la sortie M ou BP respective. Le deuxième orifice 28 est plus étroit que le premier orifice 27, de manière à plus fortement restreindre l'écoulement de lubrifiant.

En fonctionnement, tant que la pression de l'entrée IN reste insuffisante pour déplacer la soupape 14 contre la force du ressort 26, la soupape 14 restera dans la première position, telle qu'illustrée sur la figure 2a, avec la première sortie M obturée par la soupape 14, et le deuxième orifice 28 de la soupape 14 aligné avec la deuxième sortie BP, de manière à dévier sensiblement tout le débit de lubrifiant vers le circuit de dérivation 8. A cause de la restriction de l'orifice 28, la perte de charge dans cet orifice 28 assure, dès qu'il y a un débit de lubrifiant, une moindre pression dans la deuxième sortie BP qu'à l'entrée IN. Comme la première chambre 16 est directement reliée à l'entrée IN, et la deuxième chambre 17 est reliée à la deuxième sortie BP à travers le drain 18, une différence de pression Δp est établie entre les deux chambres 16,17, séparées par la soupape 14 de manière sensiblement étanche.

A partir d'une pression ou d'un débit à l'entrée IN, correspondant à un régime prédéterminé de rotation de l'arbre moteur supérieur, la différence de pression Δp deviendra suffisante pour déplacer la soupape 14 vers la deuxième position illustrée sur la figure 2b contre le rappel de l'actionneur 26. Ainsi, le premier orifice 27 de la soupape 14 s'alignera progressivement avec la première sortie M, ouvrant graduellement le passage fluidique de l'entrée IN et la première chambre 16 vers cette première sortie M. Quand la soupape 14 arrive à la deuxième position illustrée sur la figure 2b, sensiblement tout le débit de lubrifiant fourni par le circuit d'alimentation 7 à travers l'entrée IN de la vanne 9 est transmis aux paliers 4 pour leur lubrification. Le deuxième orifice 28 de la soupape 14 n'étant plus aligné avec le conduit de la deuxième sortie BP, le passage fluidique entre la première chambre 16 et cette deuxième sortie BP est obturé. Par contre, la communication fluidique entre la deuxième sortie BP et la deuxième chambre 17 est maintenue à travers le drain 18. Ainsi, la pression agissant sur toute la surface d'actionnement hydraulique 20 reste celle de la deuxième sortie BP.

Si la pression ou le débit d'alimentation descendent en dessous d'un seuil prédéterminé, par exemple parce que le régime de l'arbre moteur 3 actionnant les pompes 11 et 13 diminue, la différence de pression Δp entre les deux chambres 16,17 deviendra à nouveau insuffisante pour maintenir la soupape 14 dans sa deuxième position contre le rappel du ressort 26. En conséquence, la soupape 14 retournera vers la première position illustrée sur la figure 2a, refermant progressivement le passage vers la première sortie M, et rouvrant celui vers la deuxième sortie BP et le circuit de dérivation 10.

Ainsi, lors d'un arrêt progressif du turbopropulseur 2, quand la vitesse de rotation de l'arbre moteur 3 arrive en dessous d'une valeur prédéterminée, le débit fourni par la pompe d'alimentation 11 ne va plus être suffisant pour maintenir une différence de pression Δp entre les deux chambres 16,17 suffisante pour maintenir la soupape 14 dans sa deuxième position, et le débit de lubrifiant fourni par le circuit d'alimentation 7 va être détourné vers le circuit de dérivation. Comme toutefois la pompe d'évacuation 13 continue à évacuer le lubrifiant des paliers 4 à travers le circuit d'évacuation 10, le dispositif de lubrification 5 limite ainsi la quantité de lubrifiant qui restera dans les paliers 4 après l'arrêt moteur, évitant ainsi la cokéfaction et les fuites, et limitant le risque d'incendie posé par ce lubrifiant dans les paliers 4. Notamment, grâce à la vanne 9, la certification de résistance au feu des équipements en aval de la sortie M de la vanne 9 suivant la norme EASA CS-E 570 pourrait être réduite à un essai de 5 minutes (« fire résistant »), au lieu de 15 minutes (« fire proof »).

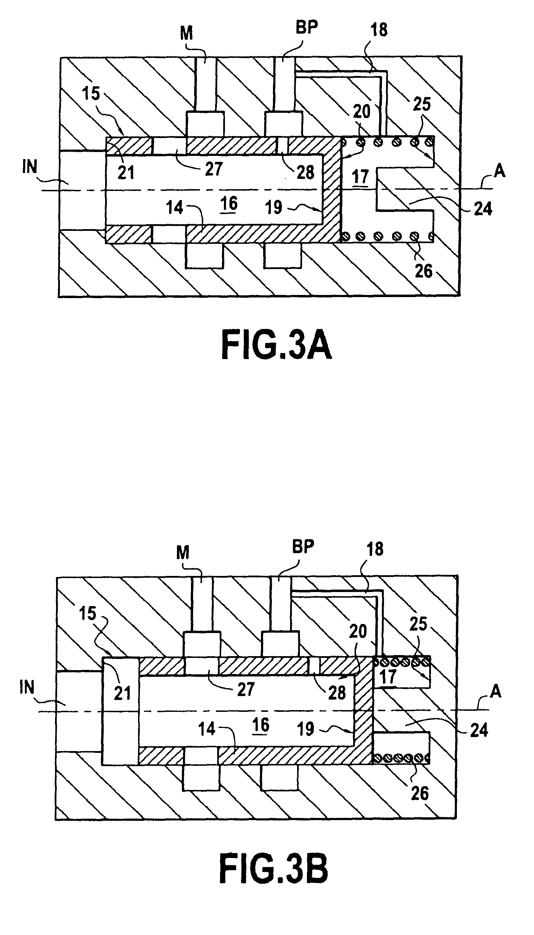

D'autres variantes de la vanne 9, pour des modes de réalisation alternatifs d'un dispositif de lubrification suivant l'invention, sont illustrées sur les figures 3a à 4b.

La vanne 9 illustrée sur les figures 3a et 3b est essentiellement équivalente à celle des figures 2a et 2b, et les éléments correspondants de cette vanne reçoivent les mêmes chiffres de référence dans les dessins. Cette vanne 9 se distingue principalement de celle du premier mode de réalisation en ce que, ni la soupape 14, ni l'alésage de la cavité 15 ne présentent d'épaulements, simplifiant ainsi sa production. Dans sa première position, illustrée sur la figure 3a, la soupape 14 est en butée contre la butée 21, tandis que dans sa deuxième position, illustrée sur la figure 3b, elle est en butée contre une protubérance 24' formée sur le fond 25 de la cavité 15. Son fonctionnement est identique à celui de la vanne illustrée sur les figures 2a et 2b, et elle pourrait être utilisée de la même manière dans le dispositif de lubrification 5 de la figure 1.

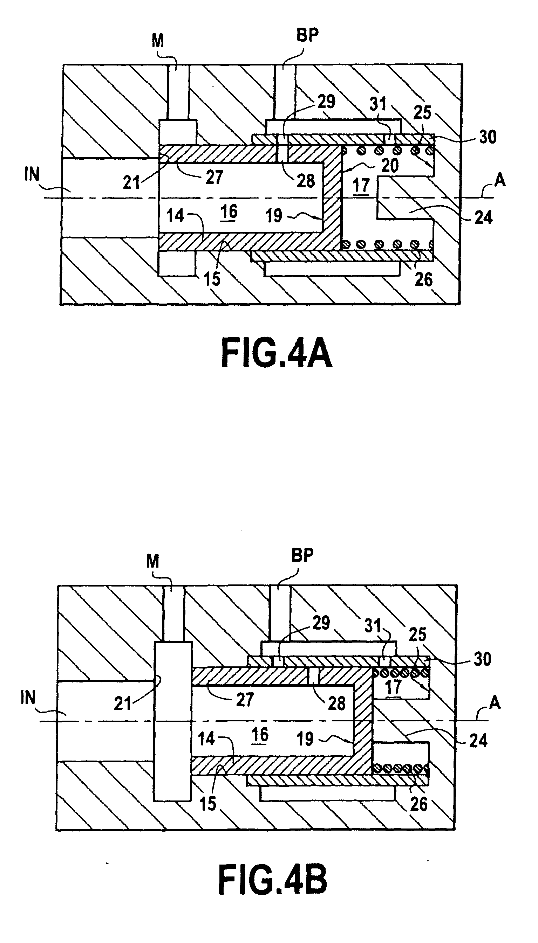

La vanne 9 illustrée sur les figures 4a et 4b est aussi essentiellement équivalente à celle des figures 2a et 2b, et les éléments correspondants de cette vanne reçoivent les mêmes chiffres de référence dans les dessins. Cette troisième variante de la vanne 9 est encore simplifiée par rapport à la deuxième variante. Notamment, la soupape 14 ne présente qu'un seul orifice radial 28, aligné dans la première position illustrée sur la figure 4a avec un orifice 29 correspondant dans une chemise 30 reçue dans un alésage élargi de la cavité 15. Cet alésage élargi est en communication fluidique avec la deuxième sortie BP de la vanne 9, de telle manière que lorsque, dans ladite première position l'orifice 28 de la soupape 14 et l'orifice 29 de la chemise 30 sont alignés, ils mettent la première chambre 16 de la vanne 9 en communication fluidique avec ladite deuxième sortie BP. La chemise 30 présente aussi un deuxième orifice 31 assurant la communication fluidique de la deuxième chambre 17 avec la deuxième sortie BP même dans la deuxième position de la soupape 14 illustrée sur la figure 4b. Dans cette deuxième position, le déplacement de la soupape 14 par rapport à la première position libère le passage fluidique de la première chambre 16 à la première sortie M de la vanne 9. Le fonctionnement de cette vanne 9 est en conséquence aussi essentiellement équivalent à celui des deux premières variantes, et elle pourrait être utilisée de la même manière dans le dispositif de lubrification 5 de la figure 1.

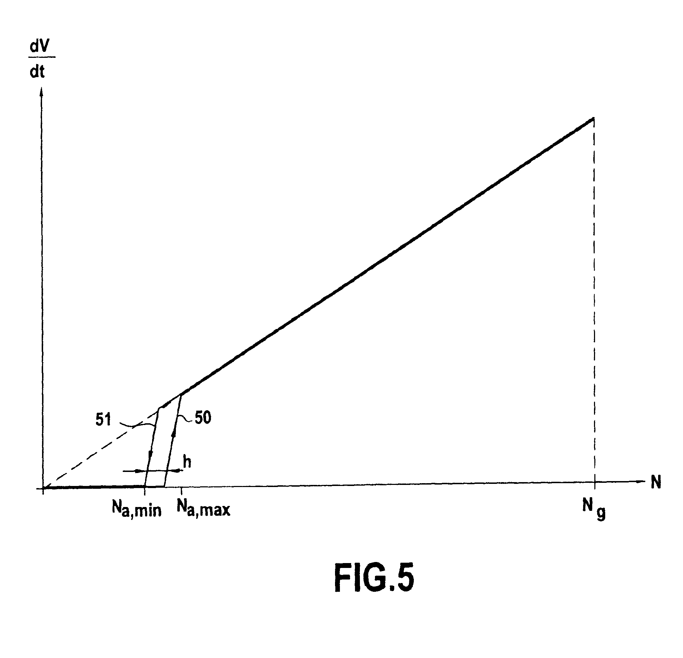

Ainsi, grâce à chacune de ces trois variantes de la vanne 9, il est possible de fournir aux paliers 4 du turbomoteur 2 un débit de lubrifiant dV/dt en fonction de la vitesse N de rotation de l'arbre moteur 3 tel que représenté sur le graphique de la figure 5, avec une hystérèse h minimale entre la courbe de régime moteur ascendant 50, et celle de régime moteur descendant 51, dans une plage de transition entre un régime minimal N_{a,min} de fermeture complète de la sortie M de la vanne 9, et un régime N_{a,max} d'ouverture complète de la sortie M de la vanne 9. De préférence, N_{a,min} peut être dans une plage d'entre 15 et 30% du régime nominal N_{g} du turbomoteur 2, et N_{a,max} peut être dans une plage d'entre 20 et 35% du régime nominal N_{g} du turbomoteur 2.

Quoique la présente invention ait été décrite en se référant à des exemples de réalisation spécifiques, il est évident que des différentes modifications et changements peuvent être effectués sur ces exemples sans sortir de la portée générale de l'invention telle que définie par les revendications. En particulier, des éléments et caractéristiques isolés de différents des modes de réalisation illustrés pourraient être combinés dans un nouveau mode de réalisation. Par conséquent, la description et les dessins doivent être considérés dans un sens illustratif plutôt que restrictif.

## Revendications

1. Un dispositif de lubrification (5) comportant :
un circuit d'alimentation (7) en lubrifiant ;
un circuit de dérivation (8) ; et
une vanne (9) interposée entre le circuit d'alimentation (7) et le circuit de dérivation (8) et comportant :
une entrée (IN) reliée audit circuit d'alimentation (7) ;
une première sortie (M) apte à être reliée à des éléments à lubrifier ;
une deuxième sortie (BP) reliée au circuit de dérivation (8) ;
une soupape (14) logée dans une cavité (15) de la vanne (9) et délimitant une première chambre (16) d'une deuxième chambre (17), ladite première chambre (16) étant reliée à l'entrée (IN), ladite soupape (14) étant apte à coulisser entre une première position et une deuxième position, et présentant du côté de la première chambre (16) une surface (19) d'actionnement hydraulique vers la deuxième position, et du côté de la deuxième chambre (17) une surface (20) d'actionnement hydraulique vers la première position ; et
un actionneur (26) de rappel de la soupape (14) vers la première position ; et où
dans ladite première position, un passage fluidique de la première chambre (16) à la deuxième sortie (BP) est ouvert, tandis qu'un passage fluidique de la première chambre (16) à la première sortie (M) est fermé, et,
dans la deuxième position, le passage fluidique de la première chambre (16) à la première sortie (M) est ouvert, tandis que le passage fluidique de la première chambre (16) à la deuxième sortie (BP) est fermé ;
ce dispositif de lubrification étant **caractérisé en ce que**, au moins dans la deuxième position, la soupape (14) sépare lesdites première et deuxième chambres (16,17) de manière sensiblement étanche, tandis que la deuxième chambre (17) reste en communication fluidique avec la deuxième sortie (BP).

2. Dispositif de lubrification (5) selon la revendication 1, dans lequel ledit circuit d'alimentation (7) en lubrifiant comporte une pompe d'alimentation (11) disposé en amont de la vanne (9).

3. Dispositif de lubrification (5) selon l'une quelconque des revendications 1 ou 2, comportant en outre un circuit d'évacuation (10) de lubrifiant pour récupérer le lubrifiant des éléments à lubrifier.

4. Dispositif de lubrification (5) selon la revendication 3, dans lequel ledit circuit d'évacuation (10) de lubrifiant comporte une pompe d'évacuation (13).

5. Dispositif de lubrification (5) selon l'une quelconque des revendications 1 à 4, dans lequel le passage fluidique reliant la première chambre (16) à la deuxième sortie (BP) dans la première position présente une plus grande résistance à l'écoulement que le passage fluidique reliant la première chambre (16) à la première sortie (BP) dans la deuxième position.

6. Appareil comportant :
un arbre rotatif (3) avec au moins un palier (4) de soutien ; et
un dispositif de lubrification (5) selon une quelconque des revendications 1 à 5 pour lubrifier ledit au moins un palier (4).

7. Appareil selon la revendication 6, **caractérisé en ce qu'**il comporte en outre, dans ledit circuit d'alimentation (7), en amont de la vanne (9), une pompe d'alimentation (11) actionnée par ledit arbre rotatif (3).

8. Appareil selon la revendication 7, **caractérisé en ce qu'**il est calibré pour ce qu'un régime de rotation (N_{a,max}) de l'arbre rotatif (3) auquel la soupape (14) arrive à la deuxième position lors d'une montée en régime soit dans une plage comprise entre 20 et 35% d'un régime nominal (N_{g}) de l'arbre rotatif (3).

9. Appareil selon l'une quelconque des revendications 7 ou 8, **caractérisé en ce qu'**il est calibré pour ce qu'un régime de rotation (N_{a,min}) de l'arbre rotatif (3) auquel la soupape (14) retourne à la première position lors d'une descente en régime soit dans une plage comprise entre 15 et 30% d'un régime nominal (N_{g}) de l'arbre rotatif (3).

10. Appareil selon l'une quelconque des revendications 6 à 9, **caractérisé en ce qu'**il comporte en outre un circuit d'évacuation (10) de lubrifiant en aval dudit palier (4), avec au moins une pompe d'évacuation (13) actionnée par ledit arbre rotatif (3).

11. Turbomachine comportant un appareil selon l'une quelconque des revendications 6 à 10.

## Patentansprüche

1. Schmiervorrichtung (5), umfassend:
einen Schmiermittelversorgungskreis (7),
einen Bypasskreis (8), und
ein Ventil (9), das zwischen dem Versorgungskreis (7) und dem Bypasskreis (8) angeordnet ist und umfasst:
einen Eingang (IN), der mit dem Versorgungskreis (7) verbunden ist,
einen ersten Ausgang (M), der geeignet ist, mit zu schmierenden Elementen verbunden zu werden,
einen zweiten Ausgang (BP), der mit dem Bypasskreis (8) verbunden ist,
eine Klappe (14), die in einem Hohlraum (15) des Ventils (9) angeordnet ist und eine erste Kammer (16) einer zweiten Kammer (17) begrenzt, wobei die erste Kammer (16) mit dem Eingang (IN) verbunden ist, wobei die Klappe (14) geeignet ist, zwischen einer ersten Position und einer zweiten Position zu gleiten, und auf der Seite der ersten Kammer (16) eine Fläche (19) zur hydraulischen Betätigung in die zweite Position und auf der Seite der zweiten Kammer (17) eine Fläche (20) zur hydraulischen Betätigung in die erste Position aufweist, und
ein Betätigungselement (26) zum Rückstellen der Klappe (14) in die erste Position, und wobei
wobei in der ersten Position ein Fluiddurchgang von der ersten Kammer (16) zum zweiten Ausgang (BP) offen ist, während ein Fluiddurchgang von der ersten Kammer (16) zum ersten Ausgang (M) geschlossen ist, und
wobei in der zweiten Position der Fluiddurchgang von der ersten Kammer (16) zum ersten Ausgang (M) offen ist, während der Fluiddurchgang von der ersten Kammer (16) zum zweiten Ausgang (BP) geschlossen ist,
wobei diese Schmiervorrichtung **dadurch gekennzeichnet ist, dass** zumindest in der zweiten Position die Klappe (14) die erste und die zweite Kammer (16, 17) im Wesentlichen dicht abtrennt, während die zweite Kammer (17) mit dem zweiten Ausgang (BP) in Fluidverbindung bleibt.

2. Schmiervorrichtung (5) nach Anspruch 1, bei der der Schmiermittelversorgungskreis (7) eine Versorgungspumpe (11) umfasst, die in Strömungsrichtung vor dem Ventil (9) angeordnet ist.

3. Schmiervorrichtung (5) nach einem der Ansprüche 1 oder 2, ferner umfassend einen Schmiermittelentsorgungskreis (10), um das Schmiermittel der zu schmierenden Elemente rückzugewinnen.

4. Schmiervorrichtung (5) nach Anspruch 3, bei der der Schmiermittelentsorgungskreis (10) eine Ablasspumpe (13) umfasst.

5. Schmiervorrichtung (5) nach einem der Ansprüche 1 bis 4, bei der der Fluiddurchgang, der die erste Kammer (16) mit dem zweiten Ausgang (BP) in der ersten Position verbindet, einen größeren Strömungswiderstand als der Fluiddurchgang, der die erste Kammer (16) mit dem ersten Ausgang (BP) in der zweiten Position verbindet, aufweist.

6. Gerät, umfassend:
eine rotierende Welle (3) mit mindestens einem Stützlager (4), und
eine Schmiervorrichtung (5) nach einem der Ansprüche 1 bis 5, um das mindestens eine Lager (4) zu schmieren.

7. Gerät nach Anspruch 6, **dadurch gekennzeichnet, dass** es ferner in dem Versorgungskreis (7) in Strömungsrichtung vor dem Ventil (9) eine Versorgungspumpe (11) umfasst, die von der rotierenden Welle (3) betätigt wird.

8. Gerät nach Anspruch 7, **dadurch gekennzeichnet, dass** es derart kalibriert ist, dass sich eine Drehzahl (N_{a,max}) der rotierenden Welle (3), bei der die Klappe (14) bei einer Drehzahlsteigerung in der zweiten Position ankommt, in einem Bereich zwischen 20 und 35 % einer Nominaldrehzahl (N_{g}) der rotierenden Welle (3) befindet.

9. Gerät nach einem der Ansprüche 7 oder 8, **dadurch gekennzeichnet, dass** sich eine Drehzahl (N_{a,min}) der rotierenden Welle (3), bei der die Klappe (14) bei einer Drehzahlverminderung in die erste Position zurückkehrt, in einem Bereich zwischen 15 und 30 % einer Nominaldrehzahl (N_{g}) der rotierenden Welle (3) befindet.

10. Gerät nach einem der Ansprüche 6 bis 9, **dadurch gekennzeichnet, dass** es ferner einen Schmiermittelentsorgungskreis (10) stromabwärts des Lagers (4) mit mindestens einer Ablasspumpe (13) umfasst, die von der rotierenden Welle (3) betätigt wird.

11. Turbomaschine, umfassend ein Gerät nach einem der Ansprüche 6 bis 10.

## Claims

1. A lubrication device (5) comprising:
a lubricant feed circuit (7);
a bypass circuit (8); and
a valve (9) interposed between the feed circuit (7) and the bypass circuit (8) and comprising:
an inlet (IN) connected to said feed circuit (7) ;
a first outlet (M) suitable for being connected to elements to be lubricated;
a second outlet (BP) connected to the bypass circuit (8);
a valve member (14) housed in a cavity (15) of the valve (9) and separating a first chamber (16) from a second chamber (17), said first chamber (16) being connected to the inlet (IN), said valve member (14) being suitable for sliding between a first position and a second position, and presenting, beside the first chamber (16), a hydraulic actuation surface (19) for urging it towards the second position, and, beside the second chamber (17), a hydraulic actuation surface (20) for urging it towards the first position; and
an actuator (26) for returning the valve member (14) towards the first position; and wherein
in said first position, a fluid flow passage from the first chamber (16) to the second outlet (BP) is open, while a fluid flow passage from the first chamber (16) to the first outlet (M) is closed; and
in the second position, the fluid flow passage from the first chamber (16) to the first outlet (M) is open, while the fluid flow passage from the first chamber (16) to the second outlet (BP) is closed;
the lubrication device being **characterized in that**, at least in the second position, the valve member (14) separates said first and second chambers (16, 17) in substantially leaktight manner, while the second chamber (17) remains in fluid flow communication with the second outlet (BP).

2. A lubrication device (5) according to claim 1, wherein said lubricant feed circuit (7) includes a feed pump (11) arranged upstream from the valve (9).

3. A lubrication device (5) according to claim 1 or claim 2, further including a lubricant discharge circuit (10) for recovering lubricant from the elements to be lubricated.

4. A lubrication device (5) according to claim 3, wherein said lubricant discharge circuit (10) includes a discharge pump (13).

5. A lubrication device (5) according to any one of claims 1 to 4, wherein the fluid flow passage connecting the first chamber (16) to the second outlet (BP) in the first position presents greater resistance to flow than the fluid flow passage connecting the first chamber (16) to the first outlet (M) in the second position.

6. Apparatus comprising:
a rotary shaft (3) with at least one support bearing (4); and
a lubrication device (5) according to any one of claims 1 to 5 for lubricating said at least one bearing (4).

7. Apparatus according to claim 6, **characterized in that** it further includes, in said feed circuit (7), upstream from the valve (9), a feed pump (11) actuated by said rotary shaft (3).

8. Apparatus according to claim 7, **characterized in that** it is calibrated so that a speed of rotation (N_{a,max}) of the rotary shaft (3) at which the valve member (14) reaches the second position during an increase in speed lies in a range 20% to 35% of a nominal speed (N_{g}) of the rotary shaft (3).

9. Apparatus according to claim 7 or claim 8, **characterized in that** it is calibrated so that a speed of rotation (N_{a,min}) of the rotary shaft (3) at which the valve member (14) returns to the first position during a decrease in speed lies in a range 15% to 30% of a nominal speed (N_{g}) of the rotary shaft (3).

10. Apparatus according to any one of claims 6 to 9, **characterized in that** it further includes a lubricant discharge circuit (10) downstream from said bearing (4) with at least one discharge pump (13) driven by said rotary shaft (3).

11. A turboshaft engine including an apparatus according to any one of claims 6 to 10.
